# EUROPÄISCHE PATENTSCHRIFT

(11) **EP 3 735 536 B1**
(45) Veröffentlichungstag und Bekanntmachung des Hinweises auf die Patenterteilung: **13.10.2021**
(21) Anmeldenummer: 19725119.2
(22) Anmeldetag: 16.05.2019
(51) Int. Cl.: F04D 25/02, F04D 29/056, F16D 41/02, F04D 25/06

(54) **VERSPERRUNGSVORRICHTUNG EINES VENTILATORS**
BLOCKING DEVICE OF A FAN
DISPOSITIF DE BLOCAGE D'UN VENTILATEUR

(30) Priorität: 11.06.2018 DE 102018113869
(43) Veröffentlichungstag der Anmeldung: 11.11.2020
(73) Patentinhaber: EBM-PAPST ST. GEORGEN GMBH & CO. KG, 78112 St. Georgen (DE)
(72) Erfinder: FLEIG, Armin, 78112 St. Georgen (DE); LANGENECK, Gunter, 78056 Villingen-Schwenningen (DE)
(74) Vertreter: Staeger & Sperling Partnerschaftsgesellschaft mbB
(86) Internationale Anmeldenummer: PCT/EP2019/062629
(87) Internationale Veröffentlichungsnummer: WO 2019/238353

(56) Entgegenhaltungen:
- EP-A1- 1 460 273
- US-A1- 2009 185 907
- US-B1- 6 183 368

## Beschreibung

Die Erfindung betrifft eine Versperrungsvorrichtung eines Ventilators zur Sperrung einer Rotationsrichtung eines Rotors, über den ein Ventilatorrad des Ventilators antreibbar ist.

Aus dem Stand der Technik sind bereits verschiedene, durch einen Motor antreibbare Ventilatoren bekannt. Die Motoren bzw. die mit dem Rotor verbundenen Abtriebswellen der Motoren sind mit einem Ventilatorrad verbunden, wodurch das Ventilatorrad durch den Motor rotiert werden kann. Die Ventilatoren weisen zumeist eine vorbestimmte erste Rotationsrichtung auf, bei der das Ventilatorrad aktiv angetrieben und eine Luftströmung erzeugt wird. Soll keine Strömung mehr erzeugt werden, wird der Motor abgeschaltet. Durch einen Luftstrom entgegen der zuvor erzeugten Strömung kann es jedoch dazu kommen, dass das Ventilatorrad entgegen der vorbestimmten ersten Rotationsrichtung passiv in eine entgegengesetzte zweite Rotationsrichtung rotiert wird. Durch eine Verdrehung des Rotors entgegen der vorbestimmten ersten Rotationsrichtung kann es dazu kommen, dass insbesondere ein sensorloser Elektromotor anschließend nicht oder nur schlecht anläuft. Sensorlose Motoren ermitteln die auch für den Anlauf benötigte Position des Rotors beispielsweise durch eine Messung an den Statorwicklungen, über welche die Position der Magnete des Rotors und somit die Position des Rotors ermittelt wird. Rotiert der Rotor entgegen der vorbestimmten ersten Rotationsrichtung, kann die korrekte Rotorposition nicht oder nur aufwendig ermittelt werden.

Um die passive Rotation des Rotors zu verhindern, ist bei den im Stand der Technik bekannten Ausführungsvarianten vorgesehen, die Ventilatoren mit einer mechanischen Bremse auszuführen, was diese schwer und teuer macht. Alternativ ist auch eine elektrische Selbsthaltung durch den Motor bekannt, was jedoch eine andauernde Belastung des Motors und der Motorelektronik zur Folge hat, womit die Lebensdauer dieser Komponenten herabgesetzt wird. Eine Versperrungsvorrichtung eines Ventilators gemäß dem Oberbegriff des Anspruchs 1 ist in EP146O273 A1 offenbart.

Der Erfindung liegt deshalb die Aufgabe zugrunde, vorbesagte Nachteile zu überwinden und eine Versperrungsvorrichtung bereitzustellen, mit der eine Rotation des Rotors entgegen einer aktiv angetriebenen Rotationsrichtung effizient und kostenoptimiert verhindert werden kann.

Diese Aufgabe wird durch die Merkmalskombination gemäß Patentanspruch 1 gelöst.

Erfindungsgemäß wird hierzu eine Versperrungsvorrichtung eines Ventilators zur Sperrung einer Rotationsrichtung eines Rotors vorgeschlagen. Über den Rotor ist ein Ventilatorrad des Ventilators antreibbar. Die Versperrungsvorrichtung umfasst ein Lagerrohr, eine Rotorwelle und eine Freilaufhülse. Die Freilaufhülse ist in dem Lagerrohr aufgenommen und drehfest mit der sich durch die Freilaufhülse erstreckenden Rotorwelle verbunden. Ferner sperrt die Freilaufhülse eine Rotation der Rotorwelle zumindest gegenüber dem Lagerrohr in der Rotationsrichtung des Rotors.

Bei der Rotationsrichtung, in welcher die Rotation der Rotorwelle durch die Freilaufhülse gesperrt ist, handelt es sich um die zweite Rotationsrichtung entgegen der vorbestimmten ersten Rotationsrichtung, durch welche mit dem Ventilatorrad eine Strömung erzeugt wird. Dadurch wird eine Rotation der Rotorwelle und des mit der Rotorwelle verbundenen Rotors in die erste Rotationsrichtung ermöglicht und in die zweite Rotationsrichtung gesperrt.

Freilaufhülsen sind in der Technik bekannt als Koaxialhülsen, die gegeneinander in eine Rotationsrichtung verdrehbar und in die entgegengesetzte Rotationsrichtung gesperrt sind. Durch die unmittelbare Anbindung der Rotorwelle an die unmittelbar oder mittelbar an dem Lagerrohr abgestützte Freilaufhülse wird die Rotation der Rotorwelle in die eine Rotationsrichtung gesperrt und in die entgegengesetzte Rotationsrichtung gewährleistet.

Die Versperrungsvorrichtung umfasst erfindungsgemäß ferner eine zwischen der Freilaufhülse und dem Lagerrohr befestigte Buchse. In der Buchse ist die Freilaufhülse drehfest fixiert. In dieser Ausführung begrenzt die Buchse die Rotation der Freilaufhülse gegenüber dem Lagerrohr. Dadurch, dass die Rotorwelle in der Freilaufhülse und die Freilaufhülse in der Buchse aufgenommen sind, wird durch die Buchse auch eine Rotation der Rotorwelle gegenüber dem Lagerrohr begrenzt.

Eine weitere vorteilhafte Ausbildungsvariante sieht vor, dass die Buchse in Axialrichtung eine Auflagefläche und das Lagerrohr eine Anschlagfläche ausbilden. Die Flächen sind einander zugewandt. Die Auflagefläche der Buchse liegt an der Anschlagfläche des Lagerrohrs an, womit die Position der Buchse in Axialrichtung in dem Lagerrohr festgelegt ist.

Um eine Rotation der Rotorwelle um ihre Rotationswelle in dem Lagerrohr zu ermöglichen, ist die Rotorwelle durch zumindest ein Lager an bzw. in dem Lagerrohr gelagert. Das Lager kann ein Radiallager oder eine Kombination aus Radial- und Axiallager sein und ist vorzugsweise als Kugellager ausgebildet. Die Rotorwelle wird durch das Lager in dem Lagerrohr konzentrisch zu dem Lagerrohr angeordnet, indem ein Außenumfang des Lagers an einer Innenwand des Lagerrohrs und der Innenumfang des Lagers an der Rotorwelle anliegen. Die Freilaufhülse und - falls vorgesehen - die Buchse werden durch das Lager in einer Ausführungsvariante, bei welcher die Buchse in Radialrichtung zu dem Lagerrohr beabstandet ist, ebenfalls konzentrisch zu dem Lagerrohr angeordnet.

Zwischen dem Lager und der Buchse ist bei einer weiteren vorteilhaften Ausbildungsvariante eine Feder, insbesondere eine Druckfeder angeordnet. Die Feder liegt mittelbar oder unmittelbar an der Buchse und dem Lager an und drückt diese in Axialrichtung auseinander. Hierfür kann an der Buchse gegenüber der Auflagefläche der Buchse eine Feder-Auflagefläche ausgebildet sein, an welcher die Feder in Axialrichtung anliegt. Die Feder erstreckt sich innerhalb des Lagerohrs zu dem Lager und liegt direkt oder mittels einer Ringscheibe an dieser an.

Eine weitere Ausführungsform sieht vor, dass das Lager in Axialrichtung fixiert ist und die Feder die Auflagefläche der Buchse gegen die Anschlagfläche des Lagerrohrs presst.

Ist das Lager an einer von der Feder abgewandten Seite durch einen Innen-Sicherungsring in seiner Lage in Axialrichtung gegenüber dem Lagerrohr festgelegt, wird die Lage der Buchse in Axialrichtung durch das Andrücken der Buchse an die Anschlagfläche des Lagerrohrs bestimmt.

Besonders vorteilhaft ist zudem eine alternative Ausführungsvariante, bei welcher das Lager an einer von der Feder abgewandten Seite durch einen Außen-Sicherungsring in seiner Lage in Axialrichtung gegenüber der Rotorwelle festgelegt ist. Die Feder stützt sich hierbei über das Lager an der Rotorwelle ab und presst die Buchse gegen das Lagerrohr. Dabei wird die Rotorwelle durch die Feder in eine von der Buchse in Richtung des Lagers weisenden Richtung auf Zug belastet. Ist die Rotorwelle an einer entgegengesetzten Richtung mit einem zweiten Lager an dem Lagerrohr gelagert, wird dieses in das Lagerrohr hinein und gegen einen axialen Anschlag des zweiten Lagers gezogen.

Entsprechend sieht eine weitere vorteilhafte Ausbildungsvariante vor, dass die Rotorwelle durch ein erstes und ein zweites Lager in dem Lagerrohr gelagert ist, die in Axialrichtung voneinander beabstandet und durch die Feder zueinander verspannt sind.

Das Lagerrohr weist erfindungsgemäß zudem eine innenwandseitige Ausnehmung und die Buchse einen axialen Kopfabschnitt auf. Der Kopfabschnitt ist mit einem asymmetrischen Querschnitt orthogonal zu der Axialrichtung ausgebildet. Ein Teil des Kopfabschnitts bzw. der Kopfabschnitt greift in die Ausnehmung des Lagerrohrs ein. Die Auflagefläche der Buchse ist vorzugsweise an dem Kopfabschnitt ausgebildet und die Feder-Auflagefläche an einer der Auflagefläche der Buchse gegenüberliegenden Seite an dem Kopfabschnitt.

Erfindungsgemäß ist die Ausnehmung in Umfangsrichtung größer ausgebildet als der Kopfabschnitt und eine Rotation der Buchse in Umfangsrichtung um einen vorbestimmten Winkel ist zugelassen. Die Buchse kann in dem Lagerrohr um die Rotationsachse rotiert werden, bis der Kopfabschnitt durch die Rotation an einer Begrenzungsfläche der Ausnehmung zu Anlage kommt. Durch die Rotation der Buchse um den vorbestimmten Winkel, kann der Rotor bzw. das Ventilatorrad trotz Freilaufhülse um den vorbestimmten Winkel verdreht werden. Hierdurch können beispielsweise Schrauben zugänglich gemacht oder Einstellungen an dem Ventilatorrad vorgenommen werden. Beispielsweise ist es auch möglich, durch Einbringen eines Klebstoffs an dem Kopfabschnitt die Rotation um den vorbestimmten Winkel nur bei der Montage zu erlauben und für den herkömmlichen Betrieb zu sperren.

In einer alternativen Ausführung die nicht zu der Erfindung gehört, sind die Ausnehmung des Lagerrohrs und der Kopfabschnitt der Buchse als Passung zueinander ausgebildet. Durch die Passung ist eine Rotation der Buchse in ihre Umfangsrichtung gesperrt, da die Buchse nicht gegenüber dem Lagerrohr verdreht werden kann. Als Passung kann insbesondere eine Spielpassung verwendet werden. Dabei liegt der Kopfabschnitt nicht an der Ausnehmung bzw. an dem Lagerrohr an.

Die Buchse ist bei einer vorteilhaften Weiterbildung in Radialrichtung von dem Lagerrohr beabstandet, wodurch die Lage der Buchse und der Freilaufhülse in Radialrichtung von der Rotorwelle abhängig ist. Die Rotorwelle wird durch die bzw. das Lager konzentrisch in dem Lagerrohr gehalten, womit die Rotorwelle in ihrer Lage nicht durch einen zusätzlichen Auflagepunkt mittels der Buchse an dem Lagerrohr überbestimmt ist.

Eine alternative Ausführungsvariante sieht vor, dass die Buchse in Radialrichtung an dem Lagerrohr anliegt. Hierbei ist jedoch vorzugsweise vorgesehen, dass das Lager, an welchem sich die Feder abstützt, in der Buchse aufgenommen ist.

Für diese Ausführung mit anliegender Buchse sieht eine vorteilhafte Weiterbildung vor, dass die Buchse mit ihrer Außenmantelfläche an eine Innenwandfläche des Lagerrohrs geklebt ist. Die Klebeschicht ermöglicht zudem eine Ausrichtung der Buchse in dem Lagerrohr.

Um die Position der Freilaufhülse in dem Lagerrohr genau festzulegen, sieht eine vorteilhafte Ausbildung der Erfindung vor, dass die Freilaufhülse in Axialrichtung eine Auflagefläche und die Buchse eine Anschlagfläche ausbilden. Die Flächen sind einander zugewandt. Die Auflagefläche der Freilaufhülse liegt an der Anschlagfläche der Buchse an. Die Position der Buchse wird durch ihre Auflagefläche und die Anschlagfläche des Lagerrohrs bestimmt, die wiederum die Position bzw. Lage der Freilaufhülse in Axialrichtung in dem Lagerrohr festgelegt.

Die Erfindung umfasst ferner ein Ventilator mit einem Antriebsmotor, einem durch den Antriebsmotor antreibbaren Ventilatorrad sowie einer erfindungsgemäßen Versperrungsvorrichtung zur Sperrung der Rotation des Ventilatorrades in eine Rotationsrichtung.

Die vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine erste Ausführungsvariante einer Versperrungsvorrichtung im Querschnitt;
- Fig. 2: ein zu der Rotationsachse orthogonaler Schnitt durch eine Versperrungsvorrichtung;
- Fig. 3: eine um 90° um die Rotationsachse gedrehte zweite Ansicht der Versperrungsvorrichtung aus Figur 1 im Querschnitt;
- Fig. 4: eine zweite Ausführungsvariante einer Versperrungsvorrichtung im Querschnitt.

Die Figuren sind beispielhaft schematisch. Gleiche Bezugszeichen in den Figuren weisen auf gleiche funktionale und/oder strukturelle Merkmale hin.

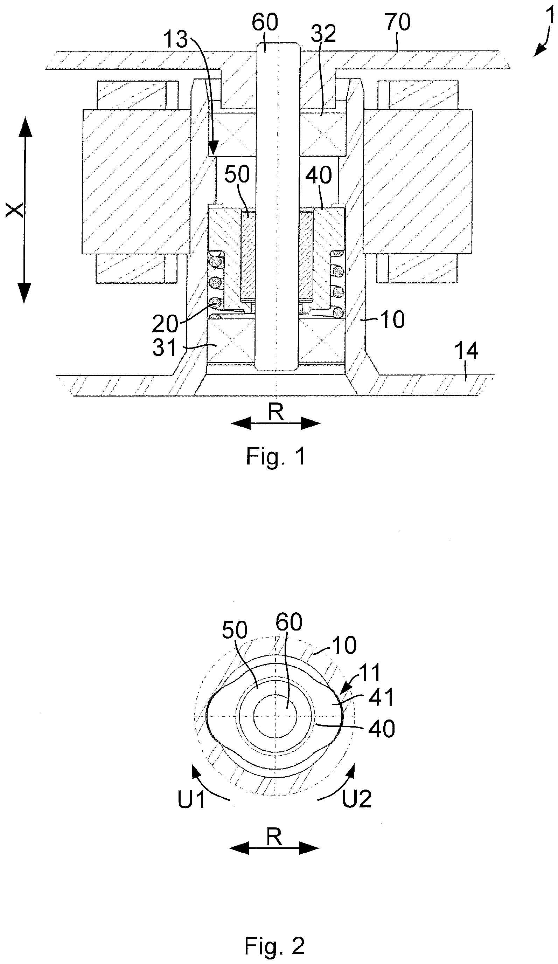

Bei den in den Figuren 1, 3 und 4 dargestellten Versperrungsvorrichtungen 1 für einen nicht gezeigten Ventilator erstreckt sich jeweils eine Rotorwelle 60 entlang der Rotationsachse (als Strichpunktlinie dargestellt) durch ein Lagerrohr 10. Die Rotorwelle 60 ist durch eine Lageranordnung aus einem ersten Lager 31 und einem zweiten Lager 32 gegenüber dem Lagerrohr 10 gelagert. Um einen Abschnitt der Rotorwelle 60 ist jeweils eine Freilaufhülse 50 angeordnet und beispielsweise durch Klemmung drehfest mit ihr verbunden. An einer unteren Seite des Lagerrohres 10 geht dieses in einen Flansch 14 über, mit welchem die jeweilige Versperrungsvorrichtung 1 beispielsweise an einer Grundplatte oder einem Gehäuse fixierbar ist. An einer von dem Flansch 14 abgewandten Seite der Rotorwelle 60 ist der Rotor 70 mit der Rotorwelle 60 drehfest verbunden, wobei der Rotor 70 mittels der Lageranordnung der Rotorwelle 60 um die Rotationsachse gelagert ist. Durch die Verbindung der Rotorwelle 60 mit dem Rotor 70 entspricht eine Rotation des Rotors 70 einer Rotation der Rotorwelle 60 und umgekehrt. Über den Rotor 70 wird das nicht gezeigte Ventilatorrad angetrieben.

Die Freilaufhülse 50 sperrt jeweils die Rotation der Rotorwelle 60, des Rotors 70 und mithin des nicht gezeigten Ventilatorrades in eine Rotationsrichtung um die Rotationsachse, wobei diese sich in der gezeigten Ausführung nicht unmittelbar an dem Lagerrohr 10 abstützt, sondern in einer Buchse 40 aufgenommen ist, die zwischen der Freilaufrolle 50 und dem Lagerrohr 10 angeordnet ist.

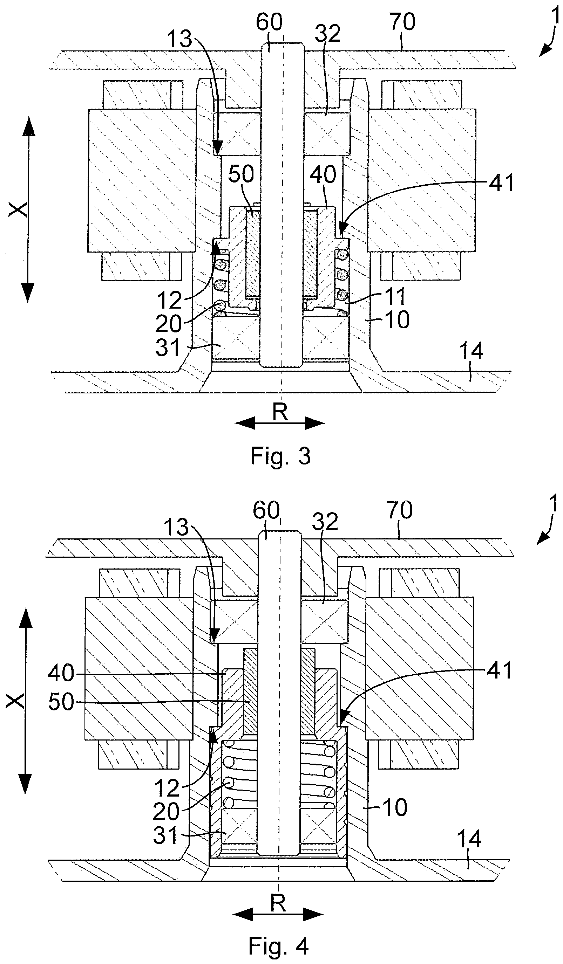

Bei den Figuren 1 und 3 ist eine Versperrungsvorrichtung 1 in sich voneinander unterscheidenden Ansichten abgebildet. Die Versperrungsvorrichtung 1 der Figur 3 ist gegenüber der Darstellung in Figur 1 um 90° um die als Strichpunktlinie dargestellte Rotationsachse gedreht, jedoch wie die Versperrungsvorrichtung 1 in Figur 1 im Schnitt bzw. Halbschnitt gezeigt. Die Buchse 40 liegt in Radialrichtung R jeweils nicht an dem Lagerrohr 10 an. Die Lage der Rotorwelle 60, der an der Rotorwelle 60 angeordneten Freilaufhülse 50 und der Buchse 40 wird jeweils durch die Lageranordnung der Rotorwelle 60 bestimmt. Durch den Abstand zwischen der Buchse 40 und dem Lagerrohr 10 ist jeweils eine geringfügige Rotation der Buchse 40 mit der Freilaufhülse 50 und der Rotorwelle 60 in beide Rotationsrichtungen möglich, wobei diese durch die Form der Buchse 40 und insbesondere durch die Form des asymmetrischen Abschnitts der Buchse 40 begrenzt ist.

In Figur 2 sind die Buchse 40 und das umliegende Lagerrohr 10 ausschnittsweise und aus der Draufsicht gezeigt. Erfindungsgemäß weist die Buchse 40 einen axialen Kopfabschnitt mit einem asymmetrischen Querschnitt auf. Die Buchse 40 der Figur 2 entspricht der Buchse 40 aus den Figuren 1 und 3 und weist einen Kopfabschnitt auf, in welchem sie in einer im Wesentlichen elliptischen Form ausgebildet ist. Die zwei gegenüber der runden Grundform der Buchse 40 hervorspringenden Fortsätze bilden eine Verdrehsicherung aus. Die Fortsätze greifen in die innenwandseitigen Ausnehmungen 11 des Lagerrohres ein. Erfindungsgemäß ist die Ausnehmung 11 in Umfangsrichtung größer ausgebildet als der Kopfabschnitt der Buchse 40 und lässt eine Rotation der Buchse 40 in Umfangsrichtung um einen vorbestimmten Winkel zu. In der Figur 2 Ausführung verbleibt ein geringer Spalt zwischen den Fortsätzen und dem Lagerrohr 10 und die Buchse 40 ist in Radialrichtung R von dem Lagerrohr 10 beabstandet. Die

Buchse 40 kann um die Rotationsachse in die Rotationsrichtungen U1 und U2 gedreht werden, bis die Fortsätze oder zumindest ein Fortsatz an dem Lagerrohr 10 anliegt. Die Rotationsrichtung U1 entspricht der vorbestimmten Rotationsrichtung zur Erzeugung einer Strömung und wird durch die Freilaufhülse 50 nicht gesperrt. In die entgegengesetzte Rotationsrichtung U2 wird die Rotation der Rotorwelle 60 gegenüber der Buchse von der Freilaufhülse 50 blockiert bzw. gesperrt. In Figur 2 ist ferner sichtbar, dass das Lagerrohr 10, die Buchse 40, die Freilaufhülse 50 sowie die Rotorwelle 60 konzentrisch zueinander angeordnet sind.

Die Buchse 40 liegt mit ihrer Anlagefläche 41 in der Versperrungsvorrichtung 1, wie sie in den Figuren 1 und 3 dargestellt ist, an einer in Axialrichtung X weisenden Anschlagfläche 12 des Lagerohrs 10 an. An einer der Anlagefläche 41 gegenüberliegenden Seite der Buchse 40 ist eine Feder-Anlagefläche ausgebildet, an welcher die Feder 20 anliegt. Die Feder 20 ist zwischen der Buchse 40 und dem ersten Lager 31 angeordnet. Durch eine Fixierung des ersten Lagers 31 in Axialrichtung X, beispielsweise mittels eines Außen-Sicherungsrings (nicht gezeigt) auf der Rotorwelle 60 an einer von der Buchse 40 abgewandten Seite des ersten Lagers 31, wird die Buchse 40 bzw. die Anlagefläche 41 der Buchse 40 durch die Feder 20 gegen die Anschlagsfläche 12 des Lagerrohrs 10 gepresst. Zugleich wird durch die Feder 20 das erste Lager 31 und mit dem ersten Lager 31 die Rotorwelle 60 in Richtung des Flansches 14 geschoben. Da die Rotorwelle 60 über das zweite Lager 32 gegen eine Lagerfläche 13 des Lagerrohrs 10 gepresst wird, welche von der Anschlagfläche 12 abgewandt ist, kann die Rotorwelle 60 jedoch nicht in Richtung des Flansches 14 bewegt werden, so dass stattdessen die Lageranordnung bzw. das erste und das zweite Lager 31, 32 durch die Feder 20 verspannt werden.

Bei dem durch die Figur 4 gezeigten Ausführungsbeispiel der Versperrungsvorrichtung 1 werden das erste und das zweite Lager 31, 32 ebenfalls durch die Feder 20 miteinander verspannt. Die Buchse 40 liegt zumindest mit einem unteren Abschnitt unmittelbar an dem Lagerrohr 10 an und ist mit diesem verklebt. Die Feder 20 und das erste Lager 31 sind in der Buchse 40 angeordnet. Da die Buchse 40 mit dem Lagerrohr 10 verklebt ist, wird die Rotation der Buchse gegenüber dem Lagerrohr 10 vollkommen gesperrt und nicht nur begrenzt.

## Patentansprüche

1. Versperrungsvorrichtung (1) eines Ventilators zur Sperrung einer Rotationsrichtung eines Rotors (70), über den ein Ventilatorrad des Ventilators antreibbar ist, umfassend ein Lagerrohr (10), eine Rotorwelle (60) und eine Freilaufhülse (50), wobei die Freilaufhülse (50) in dem Lagerrohr (10) aufgenommen und drehfest mit der sich durch die Freilaufhülse (50) erstreckenden Rotorwelle (60) verbunden ist und wobei die Freilaufhülse (50) eine Rotation der Rotorwelle (60) zumindest gegenüber dem Lagerrohr (10) in der Rotationsrichtung des Rotors sperrt,
ferner umfassend eine Buchse (40), in welcher die Freilaufhülse (50) drehfest fixiert ist, wobei die Buchse (40) eine Rotation der Freilaufhülse (50) gegenüber dem Lagerrohr (10) begrenzt, **dadurch gekennzeichnet, dass** das Lagerrohr (10) eine innenwandseitige Ausnehmung (11) und die Buchse (40) einen axialen Kopfabschnitt mit einem asymmetrischen Querschnitt aufweist, welcher in die Ausnehmung (11) des Lagerrohrs (10) eingreift, wobei die Ausnehmung (11) in Umfangsrichtung größer ausgebildet ist als der Kopfabschnitt der Buchse (40) und eine Rotation der Buchse (40) in Umfangsrichtung um einen vorbestimmten Winkel zulässt.

2. Versperrungsvorrichtung nach dem vorhergehenden Anspruch, wobei
die Buchse (40) in Axialrichtung (X) eine Auflagefläche (41) und das Lagerrohr (10) eine Anschlagfläche (12) ausbilden, die einander zugewandt sind, und wobei
die Auflagefläche (41) der Buchse (40) an der Anschlagfläche (12) des Lagerrohrs (10) anliegt.

3. Versperrungsvorrichtung nach einem der vorhergehenden Ansprüche, wobei
die Rotorwelle (60) durch zumindest ein Lager (31) an dem Lagerrohr (10) gelagert ist.

4. Versperrungsvorrichtung nach den vorhergehenden Ansprüchen, wobei
zwischen dem Lager (31) und der Buchse (40) eine Feder (20) angeordnet ist, welche das Lager (31) und die Buchse (50) in Axialrichtung (X) auseinander drückt.

5. Versperrungsvorrichtung nach dem vorhergehenden Anspruch, wobei
das Lager (31) in Axialrichtung (X) fixiert ist und die Feder (20) die Auflagefläche (41) der Buchse (40) gegen die Anschlagfläche (12) des Lagerrohrs (10) presst.

6. Versperrungsvorrichtung nach einem der vorhergehenden Ansprüche 4 oder 5, wobei
die Rotorwelle (60) durch ein erstes und ein zweites Lager (31, 32) in dem Lagerrohr (10) gelagert ist, die in Axialrichtung (X) voneinander beabstandet und durch die Feder (20) zueinander verspannt sind.

7. Versperrungsvorrichtung nach einem der vorhergehenden Ansprüche, wobei
die Buchse (40) in Radialrichtung (R) von dem Lagerrohr (10) beabstandet ist.

8. Versperrungsvorrichtung nach einem der vorhergehenden Ansprüche 1 bis 6, wobei
die Buchse (40) in Radialrichtung (R) an dem Lagerrohr (10) anliegt.

9. Versperrungsvorrichtung nach dem vorhergehenden Anspruch, wobei
die Buchse (40) mit ihrer Außenmantelfläche an eine Innenwandfläche des Lagerrohrs (10) geklebt ist.

10. Versperrungsvorrichtung nach einem der vorhergehenden Ansprüche, wobei
die Freilaufhülse (50) in Axialrichtung (X) eine Auflagefläche und die Buchse (40) eine Anschlagfläche ausbilden, die einander zugewandt sind, und wobei
die Auflagefläche der Freilaufhülse (50) an der Anschlagfläche der Buchse (40) anliegt.

11. Ventilator mit einem Antriebsmotor, einem durch den Antriebsmotor antreibbaren Ventilatorrad sowie einer Versperrungsvorrichtung (1) nach einem der vorhergehenden Ansprüche.

## Claims

1. A blocking device (1) of a fan for blocking a direction of rotation of a rotor (70), via which a fan wheel of the fan can be driven, comprising a bearing tube (10), a rotor shaft (60) and a freewheel sleeve (50), wherein the freewheel sleeve (50) is accommodated in the bearing tube (10) and is torque proof connected to the rotor shaft (60), which extends through the freewheel sleeve (50), and wherein the freewheel sleeve (50) blocks rotation of the rotor shaft (60) at least in relation to the bearing tube (10) in the direction of rotation of the rotor,
further comprising a bushing (40) in which the freewheel sleeve (50) is torque proof fixed, wherein the bushing (40) limits a rotation of the freewheel sleeve (50) in relation to the bearing tube (10),
**characterized in that** the bearing tube (10) has a recess (11) on the inner wall side and the bushing (40) has an axial head portion having an asymmetrical cross section, which engages into the recess (11) of the bearing tube (10),
wherein the recess (11) is formed to be larger in the circumferential direction than the head portion of the bushing (40) and allows a rotation of the bushing (40) in the circumferential direction by a predetermined angle.

2. The blocking device according to the preceding claim, wherein the bushing (40) forms a contact surface (41) in the axial direction (X) and the bearing tube (10) forms an abutment surface (12), which are facing each other, and wherein
the contact surface (41) of the bushing (40) abuts against the abutment surface (12) of the bearing tube (10).

3. The blocking device according to one of the preceding claims, wherein
the rotor shaft (60) is supported on the bearing tube (10) by at least one bearing (31).

4. The blocking device according to the preceding claims, wherein
a spring (20) is positioned between the bearing (31) and the bushing (40), said spring (20) pushing the bearing (31) and the bushing (50) apart in the axial direction (X).

5. The blocking device according to the preceding claim, wherein the bearing (31) is fixed in the axial direction (X) and the spring (20) presses the contact surface (41) of the bushing (40) against the abutment surface (12) of the bearing tube (10).

6. The blocking device according to one of the preceding claims 4 or 5, wherein the rotor shaft (60) is supported in the bearing tube (10) by a first and a second bearing (31, 32), which are spaced apart from one another in the axial direction (X) and braced in relation to each other by the spring (20).

7. The blocking device according to one of the preceding claims, wherein
the bushing (40) is spaced apart from the bearing tube (10) in the radial direction (R).

8. The blocking device according to one of the preceding claims 1 to 6, wherein the bushing (40) abuts against the bearing tube (10) in the radial direction (R).

9. The blocking device according to the preceding claim, wherein the bushing (40) is glued with its outer circumferential surface to an inner wall surface of the bearing tube (10).

10. The blocking device according to one of the preceding claims, wherein
the freewheel sleeve (50) forms a contact surface in the axial direction (X) and the bushing (40) forms an abutment surface, which are facing each another, and wherein
the contact surface of the freewheel sleeve (50) abuts against the abutment surface of the bushing (40).

11. A fan having a drive motor, a fan wheel which can be driven by the drive motor
as well as a blocking device (1) according to one of the preceding claims.

## Revendications

1. Dispositif de blocage (1) d'un ventilateur destiné à bloquer un sens de rotation d'un rotor (70) permettant d'entraîner une hélice de ventilateur du ventilateur, comprenant un tube de palier (10), un arbre de rotor (60) et une douille à roue libre (50), la douille à roue libre (50) étant logée dans le tube de palier (10) et étant reliée de manière verrouillée en rotation à l'arbre de rotor (60) s'étendant à travers la douille à roue libre (50), et la douille à roue libre (50) bloquant une rotation de l'arbre de rotor (60) au moins par rapport au tube de palier (10) dans le sens de rotation du rotor,
comprenant en outre un coussinet (40) dans lequel la douille à roue libre (50) est fixée de manière verrouillée en rotation, le coussinet (40) limitant une rotation de la douille à roue libre (50) par rapport au tube de palier (10),
**caractérisé en ce que** le tube de palier (10) présente un évidement côté paroi intérieure (11) et le coussinet (40) présente une partie de tête axiale ayant une section transversale asymétrique qui vient en prise dans l'évidement (11) du tube de palier (10),
dans lequel l'évidement (11) est réalisé pour être plus grand que la partie de tête du coussinet (40) dans la direction circonférentielle et autorise une rotation du coussinet (40) d'un angle prédéterminé dans la direction circonférentielle.

2. Dispositif de blocage selon la revendication précédente, dans lequel
le coussinet (40) réalise une surface d'appui (41) dans la direction axiale, et le tube de palier (10) réalise une surface de butée (12) qui sont tournées l'une vers l'autre, et dans lequel
la surface d'appui (41) du coussinet (40) est adjacente à la surface de butée (12) du tube de palier (10).

3. Dispositif de blocage selon l'une quelconque des revendications précédentes, dans lequel
l'arbre de rotor (60) est logé par au moins un palier (31) sur le tube de palier (10).

4. Dispositif de blocage selon les revendications précédentes, dans lequel
entre le palier (31) et le coussinet (40), un ressort (20) est disposé qui écarte le palier (31) et la douille (50) dans la direction axiale (X).

5. Dispositif de blocage selon la revendication précédente, dans lequel
le palier (31) est fixe dans la direction axiale (X), et le ressort (20) pousse la surface d'appui (41) du coussinet (40) contre la surface de butée (12) du tube de palier (10).

6. Dispositif de blocage selon l'une quelconque des revendications précédentes 4 ou 5, dans lequel
l'arbre de rotor (60) est logé par un premier et un deuxième palier (31, 32) dans le tube de palier (10) qui sont espacés l'un de l'autre dans la direction axiale (X) et serrés l'un par rapport à l'autre par le ressort (20).

7. Dispositif de blocage selon l'une quelconque des revendications précédentes, dans lequel
le coussinet (40) est espacé du tube de palier (10) dans la direction radiale (R).

8. Dispositif de blocage selon l'une quelconque des revendications précédentes 1 à 6, dans lequel
le coussinet (40) est adjacent au tube de palier (10) dans la direction radiale (R).

9. Dispositif de blocage selon la revendication précédente, dans lequel
le coussinet (40) est collé par sa surface enveloppante extérieure sur une surface de paroi intérieure du tube de palier (10).

10. Dispositif de blocage selon l'une quelconque des revendications précédentes, dans lequel
dans la direction axiale (X), la douille à roue libre (50) réalise une surface d'appui et le coussinet (40) réalise une surface de butée qui sont tournées l'une vers l'autre, et dans lequel
la surface d'appui de la douille à roue libre (50) est adjacente à la surface de butée du coussinet (40).

11. Ventilateur comprenant un moteur d'entraînement, une hélice de ventilateur pouvant être entraînée par le moteur d'entraînement, ainsi qu'un dispositif de blocage (1) selon l'une quelconque des revendications précédentes.
